# EUROPÄISCHE PATENTANMELDUNG

(11) **EP 2 626 582 A2**
(43) Veröffentlichungstag der Anmeldung: **14.08.2013**
(21) Anmeldenummer: 13002479.7
(22) Anmeldetag: 03.08.2009
(51) Int. Cl.: F16D 21/06, F16D 25/08

(54) **Doppelkupplung**

(30) Priorität: 22.08.2008 DE 102008039358; 18.12.2008 DE 102008063749
(62) Teilanmeldung aus: 09807899.1
(71) Anmelder: Schaeffler Technologies AG & Co. KG, 91074 Herzogenaurach (DE)
(72) Erfinder: Acker, Christophe, 67760 Gambsheim (FR)

(57) **Zusammenfassung**

Die vorliegende Erfindung betrifft eine Doppelkupplung, insbesondere zur Anwendung in Lastkraftwagen, mit einer ersten Teilkupplung (K1)und mit einer zweiten Teilkupplung (K2), und mit einer Betätigungseinrichtung, wobei die erste Teilkupplung (K1) in deren unbetätigtem Zustand geschlossen ist und zum Öffnen dieser ersten Teilkupplung (K1) eine Zugkraft aufgebracht wird, und dass die zweite Teilkupplung (K2) in deren unbetätigtem Zustand geöffnet ist und zum Schließen dieser zweiten Teilkupplung (K2) eine Druckkraft aufgebracht wird, so dass die Betätigungskraft der ersten Teilkupplung (K1) entgegen der Betätigungskraft der zweiten Teilkupplung (K2) wirkt und wobei die Betätigungseinrichtung zwei pneumatisch oder hydraulisch betätigte Teilbetätigungseinrichtungen aufweist, von denen jeweils eine zur Betätigung einer der beiden Teilkupplungen (K1, K2) vorgesehen ist, wobei die erste Teilbetätigungseinrichtung einen ersten Zylinder (4) mit einem Betätigungskolben (5) und die zweite Teilbetätigungseinrichtung einen zweiten Zylinder (21) mit einem Betätigungskolben (22) aufweisen, die als ein gemeinsames bezüglich einer Rotationsachse der Doppelkupplung zentral angeordnetes Betätigungsmittel getriebeseitig angeordnet sind, wobei mit dem ersten Zylinder eine Zugkraft (FK1) und mit dem zweiten Zylinder eine Druckkraft (FK2) zur Betätigung der jeweiligen Teilkupplungen in der Art erzeugbar sind, dass diese gegensinnig zueinander wirken.

## Beschreibung

Die vorliegende Erfindung betrifft eine Doppelkupplung, welche insbesondere in Lastkraftwagen verwendbar ist.

Doppelkupplungen werden in Fahrzeugen eingesetzt, um eine Lastschaltung zu ermöglichen.

Eine Doppelkupplungsanordnung ist beispielsweise aus der EP 0 185 176 B1 bekannt und weist eine erste Teilkupplung K1 und eine zweite Teilkupplung K2 auf.

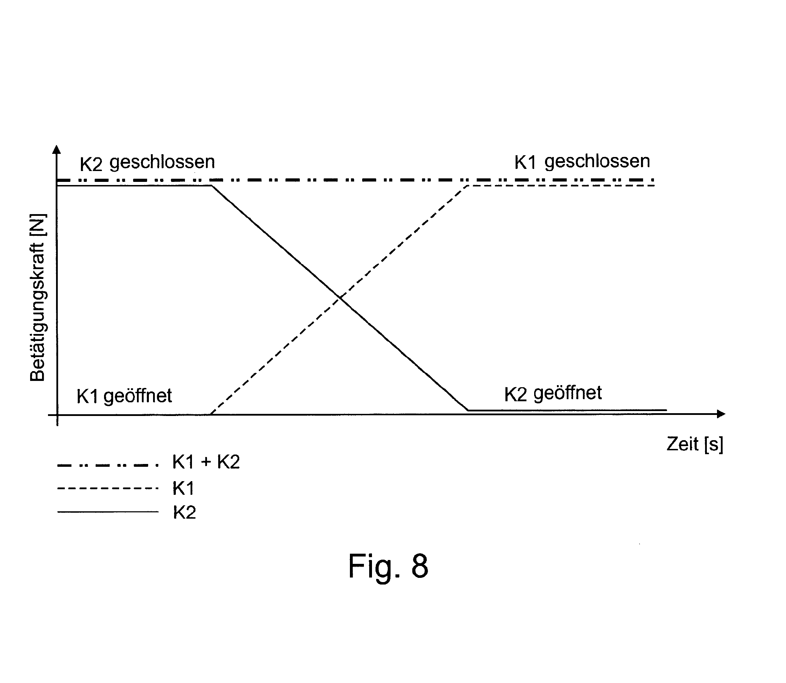

Bei einer solchen Doppelkupplung gibt es die Anordnung, dass beide Teilkupplungen K1 und K2 im Grundzustand offen ("Normally Open") sind und über zumindest eine Betätigungseinrichtung zugedrückt werden. Dann müssen die zum Zudrücken notwendigen normalerweise abwechselnd aufgebrachten Betätigungskräfte in der gleichen Richtung aufgebracht werden. Die Betätigungskräfte müssen dann an einem Abstützlager an der Kurbelwelle oder im Getriebe aufgenommen werden. Die sich bei einer solchen Anordnung ergebenden Kräfte sind dem in Fig. 8 gezeigten Diagramm entnehmbar. In diesem Diagramm ist die Teilkupplung K1 zunächst offen, die Teilkupplung K2 ist zunächst geschlossen. Die Gesamtbetätigungskraft ist daher gleich der Betätigungskraft der Teilkupplung K2. Anschließend wird eine Überschneidungsschaltung durchgeführt, um die Teilkupplung K1 zu schließen und die Teilkupplung K2 zu öffnen. Entsprechend nimmt die Betätigungskraft der Teilkupplung K1 zu und die Betätigungskraft der Teilkupplung K2 ab. Die Gesamtbetätigungskraft bleibt aber im Wesentlichen gleich. Im Endzustand ist die Teilkupplung K1 geschlossen und die Teilkupplung K2 offen. Die Gesamtbetätigungskraft entspricht der Betätigungskraft der Teilkupplung 1. Wie dem Diagramm entnehmbar, bleibt die Gesamtbetätigungskraft über den gesamten Zeitraum im Wesentlichen gleich hoch.

Bei einer alternativen Ausbildung der Doppelkupplung gibt es die Anordnung, dass die Teilkupplung K1 im Grundzustand geschlossen ("Normally Closed") ist und über zumindest eine Betätigungseinrichtung aufgedrückt wird, und dass die Teilkupplung K2 im Grundzustand offen ("Normally Open") ist und über zumindest eine Betätigungseinrichtung zugedrückt wird. Es ergeben sich bei einer solchen Anordnung zwei unterschiedliche Zustände: Wenn die Teilkupplung K1 geschlossen und die Teilkupplung K2 offen sind, wird keine Betätigungskraft benötigt. Um die Teilkupplung K1 zu öffnen und die Teilkupplung K2 zu schließen, werden hingegen zwei Betätigungskräfte benötigt. In diesem Fall addieren sich die beiden Betätigungskräfte und ergeben eine hohe Axialkraft auf dem Abstützlager.

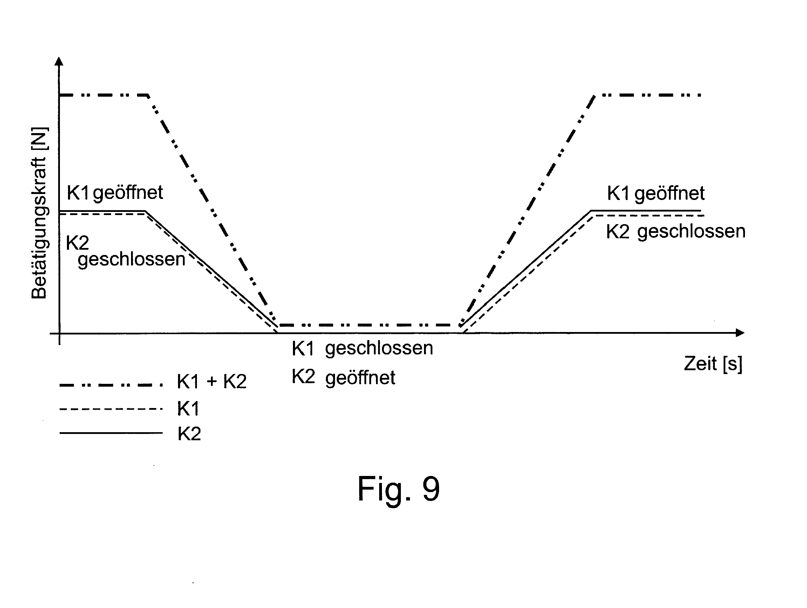

Die sich bei einer solchen Anordnung ergebenden Kräfte sind dem in Fig. 9 gezeigten Diagramm entnehmbar. In diesem Diagramm ist die Teilkupplung K1 zunächst offen, die Teilkupplung K2 ist zunächst geschlossen. Die Gesamtbetätigungskraft ist daher gleich der Summe aus Öffnungskraft der Teilkupplung K1 und der Schließkraft der Teilkupplung K2. Anschließend wird eine Überschneidungsschaltung durchgeführt, um die Teilkupplung K1 zu schließen und die Teilkupplung K2 zu öffnen. Entsprechend nimmt die Betätigungskraft der Teilkupplung K1 auf nahe Null ab. Im Endzustand ist die Teilkupplung K1 geschlossen und die Teilkupplung K2 offen. Die Gesamtbetätigungskraft entspricht wiederum der Summe der Betätigungskräfte der Teilkupplungen K1 und K2.

Bei LKW Anwendungen, die ein Drehmoment bis zu 3300...3500 Nm aufweisen können, treten Ausrückkräfte bis zu 12400...15000 N auf. Wenn man eine Doppelkupplung bei LKW Anwendungen einsetzen möchte, müsste dabei die Kurbelwellenlagerung oder das Getriebelager bei den vorstehend beschriebenen Anordnungen die zweifache Betätigungskraft abstützen. Ziel ist es daher, diese Summe den beiden Betätigungskräfte zu minimieren, um eine derartige Auslegung der Lagerung und alle damit verbundenen Änderungen im Gehäuse zu vermeiden.

Es ist eine Aufgabe der vorliegenden Erfindung, das an sich bekannte Doppelkupplungskonzept für die Anwendung in Lastkraftwagen dahingehend zu verändern, dass deutlich höhere Drehmomente übertragen werden können.

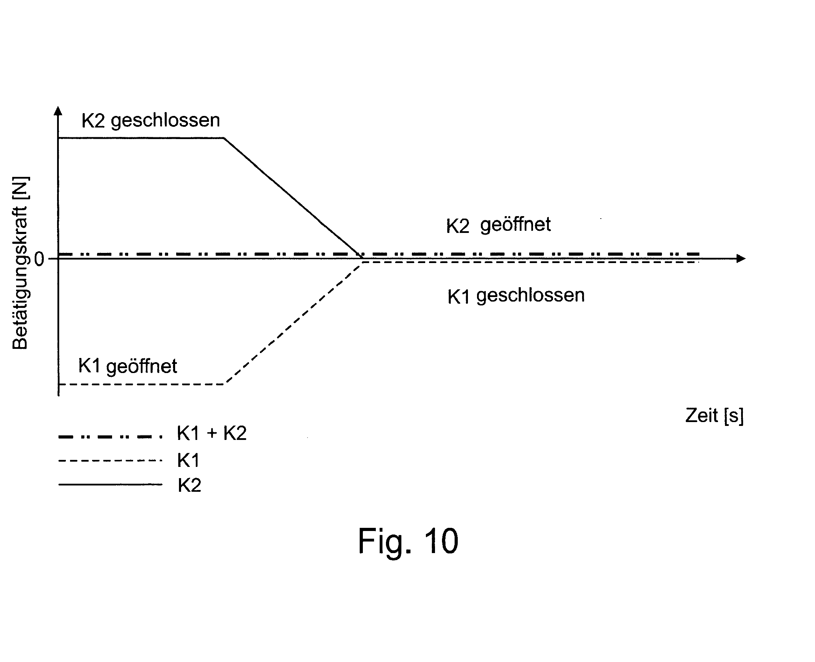

Diese Aufgabe wird erfindungsgemäß gelöst durch eine Doppelkupplung mit einer ersten Teilkupplung, über die eine Antriebswelle eines Antriebs mit einer ersten Getriebeeingangswelle eines Getriebes verbindbar ist und mit einer zweiten Teilkupplung über die die Antriebswelle des Antriebs mit einer zweiten Getriebeeingangswelle des Getriebes verbindbar ist und mit einer Betätigungseinrichtung, wobei die erste Teilkupplung K1 in deren unbetätigtem Zustand geschlossen ist ("normally closed") und zum Öffnen dieser ersten Teilkupplung K1 eine Zugkraft aufgebracht wird ("gezogene Kupplung"), und wobei die zweite Teilkupplung K2 in deren unbetätigtem Zustand geöffnet ist ("normally open") und zum Schließen dieser zweiten Teilkupplung eine Druckkraft aufgebracht wird ("gedrückte Kupplung"), so dass die Betätigungskraft der ersten Teilkupplung K1 entgegen der Betätigungskraft der zweiten Teilkupplung K2 wirkt. Dementsprechend ergibt sich bei einer Überschneidungsschaltung der Teilkupplungen bei Gangwechsel eine quasi Aufhebung der Betätigungskraftwirkung auf die Lagerung der Doppelkupplung. Mit der erfindungsgemäßen Kupplungszuordnung, einer zugedrückten "normally open" Kupplung und eine (auf)gezogenen "normally closed" Kupplung, ist die Summe beider Betätigungskräfte, einmal gedrückt und gleichzeitig einmal gezogen, nahe zu Null, wie in Fig. 10 dargestellt.

Die vorgenannte Aufgabe wird ebenfalls gelöst durch eine Doppelkupplung mit einer ersten Teilkupplung K1, über die eine Antriebswelle eines Antriebes mit einer ersten Getriebeeingangswelle eines Getriebes verbindbar ist und mit einer zweiten Teilkupplung K2, über die die Antriebswelle des Antriebs mit einer zweiten Getriebeeingangswelle des Getriebes verbindbar ist und mit einer Betätigungseinrichtung, wobei die Betätigungseinrichtung zwei pneumatisch betätigte Teilbetätigungseinrichtungen aufweist, von denen jeweils eine zur Betätigung einer der beiden Teilkupplungen vorgesehen ist.

Vorzugsweise weist die Betätigungseinrichtung zwei (Druck-)Zylinder auf, wobei einer der (Druck-)Zylinder als Teilbetätigungseinrichtung der ersten Teilkupplung K1 zur Ausbildung einer Zugkraft und ein zweiter (Druck-)Zylinder als Teilbetätigungseinrichtung der zweiten Teilkupplung K2 zur Ausbildung einer Druckkraft zur Betätigung der jeweiligen Teilkupplungen vorgesehen ist.

Dabei kann jede der Teilbetätigungseinrichtungen zwei voneinander getrennte Druckkammern aufweisen.

Insbesondere in Verbindung mit den vorstehend genannten Ausführungsformen wird die vorgenannte Aufgabe ebenfalls gelöst durch eine Doppelkupplung mit einer Schwungscheibe, die mit einer Antriebswelle eines Antriebs fest verbunden ist, wobei die Doppelkupplung des Weiteren eine Zentralplatte als Gegendruckplatte für die Druckplatten der Teilkupplungen aufweist, wobei diese Zentralplatte an der Schwungscheibe fixiert ist, und wobei die Doppelkupplung ausschließlich über die Befestigung der Schwungscheibe gelagert ist.

Weiterhin insbesondere in Verbindung mit den vorstehenden Ausführungsformen wird die vorgenannte Aufgabe ebenfalls gelöst durch eine Doppelkupplung mit einer ersten Teilkupplung, über die eine Antriebswelle eines Antriebs mit einer ersten Getriebeeingangswelle eines Getriebes verbindbar ist und mit einer zweiten Teilkupplung, über die die Antriebswelle des Antriebs mit einer zweiten Getriebeeingangswelle des Getriebes verbindbar ist, wobei die Doppelkupplung eine Zentralplatte als Gegendruckplatte für die Druckplatten (Anpressplatten) der Teilkupplungen aufweist, und wobei die Druckplatten beider Teilkupplungen über Blattfedern, insbesondere in Verbindung mit Nietverbindungen, direkt an der Zentralplatte fixiert sind.

Die vorgenannte Erfindung wird ebenfalls gelöst durch eine Doppelkupplung mit einer Schwungscheibe (mit oder ohne Schwingungsdämpfung), einer ersten Teilkupplung K1 mit Kupplungsscheibe, Druckplatte, Hebelelement (vorliegend ausgebildet als Tellerfeder) und Kupplungsdeckel zur Abstützung des Hebelelementes, über die eine Antriebswelle eines Antriebes mit einer ersten Getriebeeingangswelle eines Getriebes verbindbar ist und mit einer zweiten Teilkupplung K2 mit Kupplungsscheibe, Druckplatte, Hebelelement und Kupplungsdeckel zur Abstützung des Hebelelementes, über die die Antriebswelle des Antriebs mit einer zweiten Getriebeeingangswelle des Getriebes verbindbar ist, wobei die Doppelkupplung eine Zentralplatte als Gegendruckplatte für die Druckplatten der Teilkupplungen aufweist, und wobei der Kupplungsdeckel der Teilkupplung K1 und/oder der Kupplungsdeckel der Teilkupplung K2 über Schrauben fixiert und über Distanzstücke, wie Abstandröhren oder Gußnocken, zentriert sind, und wobei diese Schrauben ausschließlich auf Zug beansprucht sind. Entsprechend kann eine Belastung der Schrauben in Umfangsrichtung der Kupplungen vermieden werden.

Die vorgenannte Aufgabe wird ebenfalls gelöst durch eine Doppelkupplung mit einer Schwungscheibe (mit oder ohne Schwingungsdämpfung), einer ersten Teilkupplung K1 mit Kupplungsscheibe, Druckplatte, Hebelelement (vorliegend ausgebildet als Tellerfeder) und Kupplungsdeckel zur Abstützung des Hebelelementes, über die eine Antriebswelle eines Antriebes mit einer ersten Getriebeeingangswelle eines Getriebes verbindbar ist und mit einer zweiten Teilkupplung K2 mit Kupplungsscheibe, Druckplatte, Hebelelement und Kupplungsdeckel zur Abstützung des Hebelelementes, über die die Antriebswelle des Antriebswelle mit einer zweiten Getriebeeingangswelle des Getriebes verbindbar ist, wobei die Doppelkupplung eine Zentralplatte als Gegendruckplatte für die Druckplatten der Teilkupplungen aufweist und wobei die Doppelkupplung Schraubenverbindungen I mit Distanzstücken (wie Abstandsröhren oder Gußnocken) zur Fixierung des Kupplungsdeckels der Teilkupplung K2 an der Zentralplatte aufweist, und wobei zwischen Kupplungsdeckel der Teilkupplung K2 und Zentralplatte die Distanzstücke zur Einstellung eines definierten Abstandes zwischen diesen vorgesehen sind, und wobei die Zentralplatte Durchbrüche aufweist, welche von den Schrauben der Schraubenverbindungen durchsetzt werden und die Schrauben mit dem Schwungrad verschraubt sind.

Gemäß einem bevorzugten Ausführungsbeispiel weist die Doppelkupplung zudem weitere Schraubenverbindungen II mit Distanzstücken zur Fixierung des Kupplungsdeckels der Teilkupplung K1 an der Druckplatte der Teilkupplung K1 auf, wobei zwischen Kupplungsdeckel der Teilkupplung K1 und der Druckplatte der Teilkupplung K1 Distanzstücke zur Einstellung eines definierten Abstandes zwischen diesen vorgesehen sind, und wobei die Schrauben der Schraubenverbindungen mit der Druckplatte der Teilkupplung K1 verschraubt sind.

Gemäß einem weiteren bevorzugten Ausführungsbeispiel ist die Zentralplatte über weitere Schraubenverbindungen III ohne Distanzstücke mit der Schwungscheibe verschraubt.

Des Weiteren können die Schrauben sämtlicher der vorgenannten Arten an Schraubenverbindungen vorgespannt werden, entsprechend der zur Drehmomentübertragung notwendigen Betätigungskraft der Kupplung.

Die vorliegende Erfindung wird nachfolgend anhand bevorzugter Ausführungsbeispiele in Verbindung mit den zugehörigen Figuren näher erläutert. In diesen zeigen:
Fig. 1 Eine schematische Darstellung des Aufbaues eines Ausführungsbeispiels der Doppelkupplung, als Halbschnitt,
Fig. 2 eine perspektivische Darstellung der Doppelkupplung in zusammengebauten Zustand ohne die Betätigungsvorrichtung,
Fig. 3 eine Schnittdarstellung der Doppelkupplung im Bereich der Befestigung des Deckels der Teilkupplung K2, als Halbschnitt,
Fig. 4 eine Schnittdarstellung der Doppelkupplung im Bereich der Befestigung des Deckels der Teilkupplung K1, als Halbschnitt,
Fig. 5 eine Schnittdarstellung der Doppelkupplung im Bereich der Befestigung der Zentralplatte am Schwungrad, als Halbschnitt,
Fig. 6 eine Schnittdarstellung der Doppelkupplung im Bereich der Verbindung zwischen den Druckplatten und der Zentralplatte über vernietete Blattfederpakete,
Fig. 7 eine weitere Schnittdarstellung der Doppelkupplung im Bereich der Verbindung der Blattfederpakete mit der Zentralplatte.
Fig. 8 zeigt einen Verlauf der Betätigungskräfte bei einer bekannten Doppelkupplungsanordnung bei einer Überschneidungsschaltung.
Fig. 9 zeigt einen Verlauf der Betätigungskräfte bei einer weiteren bekannten Doppelkupplungsanordnung bei einer Überschneidungsschaltung.
Fig. 10 zeigt einen Verlauf der Betätigungskräfte bei der vorliegenden Doppelkupplungsanordnung bei einer Überschneidungsschaltung.

Die vorliegenden Ausführungsbeispiele betreffen eine Doppelkupplung, insbesondere ausgebildet für Lastkraftwagen (LKW). Die Doppelkupplung ist im Antriebstrang eines Fahrzeuges zwischen einem Antrieb und einem Doppelkupplungsgetriebe angeordnet, wobei zwischen Antrieb und Doppelkupplung ein Torsionsdämpfungselement, wie ein Zweimassenschwungrad, angeordnet sein kann.

Der Doppelkupplungsaufbau 1 umfasst eine erste Teilkupplung K1, welche im Grundzustand geschlossen ist ("normally closed"), wobei der Hebelmechanismus dieser Teilkupplung K1 derart ausgebildet ist, dass diese ersten Teilkupplung K1 mit einer Zugkraft F_{K1} beaufschlagt wird, um diese zu Öffnen, sowie eine zweite Teilkupplung K2, welche im Grundzustand offen ist ("normally open"), wobei der Hebelmechanismus dieser Teilkupplung K2 derart ausgebildet ist, dass diese zum Schließen mit einer Druckkraft F_{K2} beaufschlagt wird. Eine der Teilkupplungen K1 und K2 kann eine Verschleißnachstelleinrichtung aufweisen. Ebenso können beide Teilkupplungen K1 und K2 jeweils Verschleißnachstelleinrichtungen aufweisen.

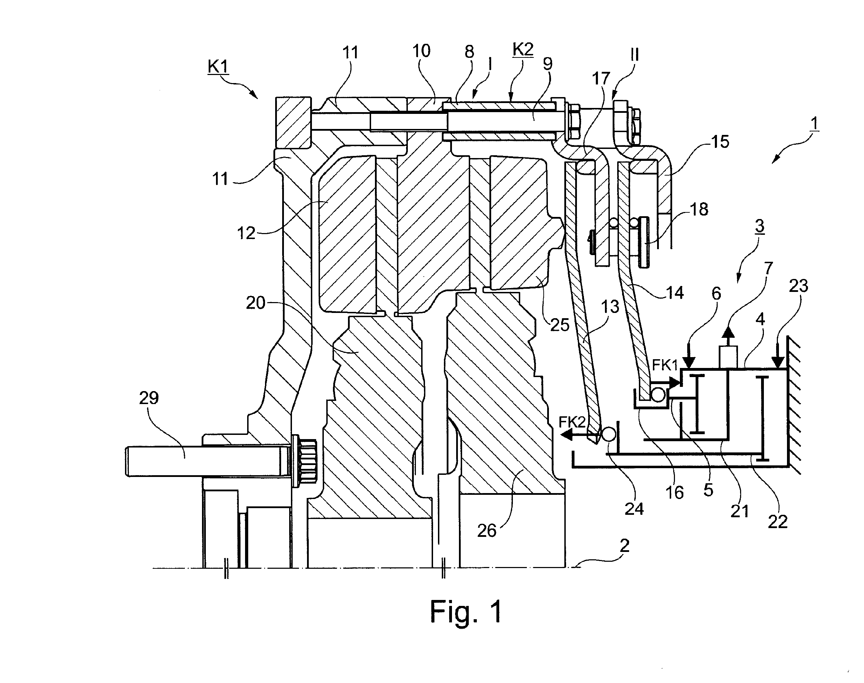

Dieser Aufbau ist insbesondere in Fig. 1 gezeigt, wobei die Betätigungskräfte (Zugkraft F_{K1} der Teilkupplung K1 und Druckkraft F_{K2} der Teilkupplung K2) von einem bezüglich einer Rotationsachse 2 der Doppelkupplung 1 zentral angeordneten Betätigungsmittel 3 erzeugt wird, welches vorliegend pneumatisch beaufschlagt wird.

Dieses Betätigungsmittel 3 umfasst einen ersten Zylinder 4 mit einem Betätigungskolben 5 und durch diesen Betätigungskolben 5 voneinander getrennten Druckkammern, wobei eine der Druckkammern an eine Druckluftleitung 6 anschließbar ist und die entsprechend andere Druckkammer an einen Luftauslaß 7 anschließbar ist. Der Luftauslaß 7 kann mit der Umgebung oder einem anderen Reservoir oder auch mit der Druckluftleitung beaufschlagbar sein, wenn dann gleichzeitig der bisherige Lufteinlass mit der Umgebung verbunden wird, wodurch sich eine schnellere Betätigung aufgrund des Umschaltens des Druckniveaus ergäbe.

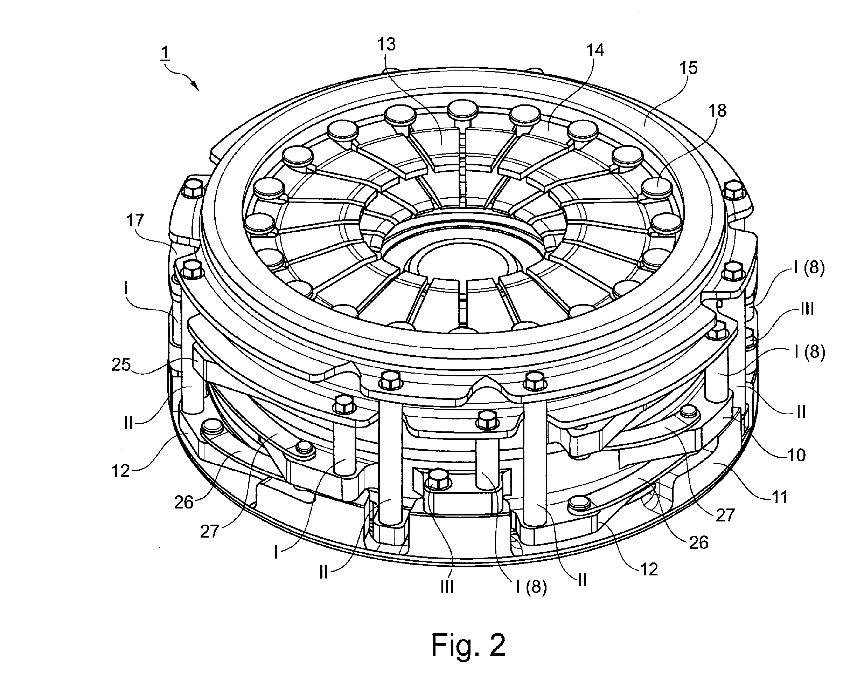

Wie in Fig. 1 und Fig. 2 gezeigt, umfassen Schraubenverbindungen II Distanzstücke sowie Schrauben, wobei die Schrauben der Schraubenverbindung II mit der Druckplatte 12 der Teilkupplung K1 verschraubt sind, und wobei die Distanzstücke in Form von Abstandsröhren zwischen den Druckplatte 12 und dem Deckel 15 verspannt sind.

Der Aufbau eines ersten Zylinders 4 des Betätigungsmittels 3 ist derart, dass eine Zugkraft F_{K1} auf die Tellerfeder 14 der Teilkupplung K1 über ein Betätigungslager (Ausrücklager) 16 ausgeübt wird, d.h. das Betätigungslager 16 vermittelt diese Zugkraft F_{K1} an die Hebelfeder 14, welche am Deckel 15 abgestützt ist. Ein äußeres Ende der Hebelfeder 14 (Tellerfeder 14) ist am Deckel K1 gelagert. Ein mittlerer Bereich der Hebelfeder 14 ist am Deckel 17 der Teilkupplung 17 abgestützt. Bei Erzeugung einer Zugkraft F_{K1} in der ersten Teilbetätigungseinrichtung 4, 5 wird die Hebelfeder 14 (welche beispielsweise als Tellerfeder ausgelegt sein kann) um die Auflagerung 18 verschwenkt und die Kontaktfläche zwischen Hebelfeder 14 und Ausrücklager 16 in Fig. 1 nach rechts verschoben, wodurch der Deckel 15 (vermittels der Schraubenverbindung II) in Fig. 1 nach links verschoben wird und die Druckplatte 12 aufgrund der Wirkung der Blattfederelemente ebenfalls nach links in Fig. 1 verschoben wird, wodurch eine Klemmung der Kupplungsscheibe 20 aufgehoben wird. Die im Grundzustand geschlossene Kupplung K1 ist dann aufgrund der Zugkraft F_{K1} geöffnet.

Das Betätigungsmittel 3 umfasst zudem eine zweite Teilbetätigungseinrichtung, welche ebenfalls als Zylinder 21 ausgebildet ist, der einen Kolben 22 sowie zwei Druckkammern aufweist, welche durch den Kolben 22 voneinander getrennt werden, wobei wiederum eine der Druckkammern mit einer Druckluftleitung 23 und einer anderen mit einem Auslass 7 verbindbar sind, und wobei diese Verbindungen (genauso wie bei der ersten Teilbetätigungseinrichtung 4, 5) auch in Form eines Mehrwegeventils (insbesondere Drei-Wege-Ventil) möglich ist, wobei eines der Wege mit der Druckluftleitung und die beiden anderen Wege mit den jeweiligen Druckkammern verbindbar sind.

Der zweite Zylinder 21 ist derart aufgebaut, dass eine Druckkraft F_{K2} erzeugt wird, welche über das Betätigungslager 24 (Einrücklager) an die Hebelfeder 13 vermittelt wird. Der äußere Bereich der Hebelfeder 13 ist am Deckel 17 der Teilkupplung K2 abgestützt, welcher über die Distanzstücke 8 der Schraubenverbindungen I an der Zentralplatte 10 abgestützt und über die Schrauben 9 der Schraubenverbindung I an der Schwungscheibe 11 befestigt ist.

Der Deckel 17 ist also über die Distanzstücke 8 der Schraubenverbindung I an der Zentralplatte 10 abgestützt und über die Schrauben 9 der Schraubenverbindung I an der Schwungscheibe 11 fixiert, d.h. die Schrauben 9 der Schraubenverbindung durchdringen Durchlässe in der Zentralplatte 10 und sind mit der Schwungscheibe 11 verschraubt. Die Distanzstücke 8 sind als Abstandsröhren ausgebildet, wobei die Schrauben 9 in den Abstandsröhren aufgenommen sind.

Fig. 2 zeigt die Doppelkupplung 1 in zusammengebauten Zustand.

Insbesondere zeigt Fig. 2 die Anbindung des Deckels 17 der Teilkupplung K2 an der Zentralplatte 10 und die Befestigung der Zentralplatte 10 an der Schwungscheibe 11, beides über die Schraubenverbindung I mit Distanzstück 8.

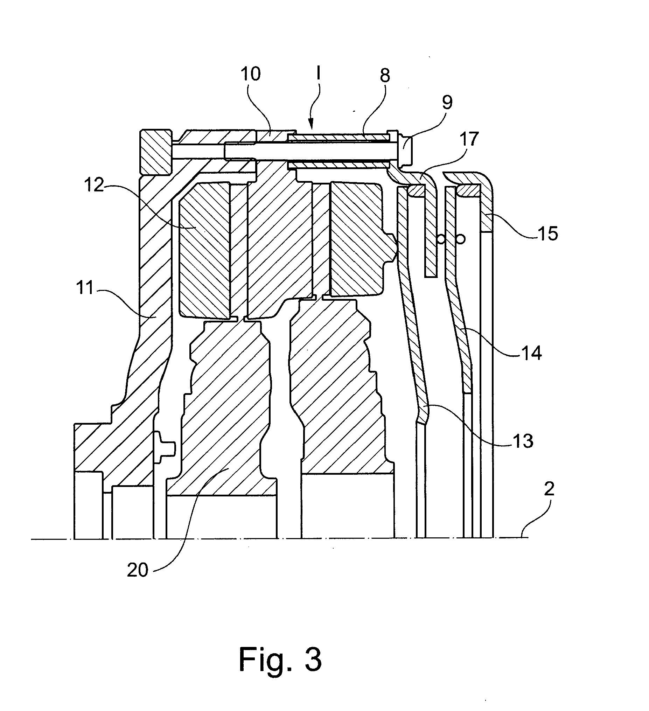

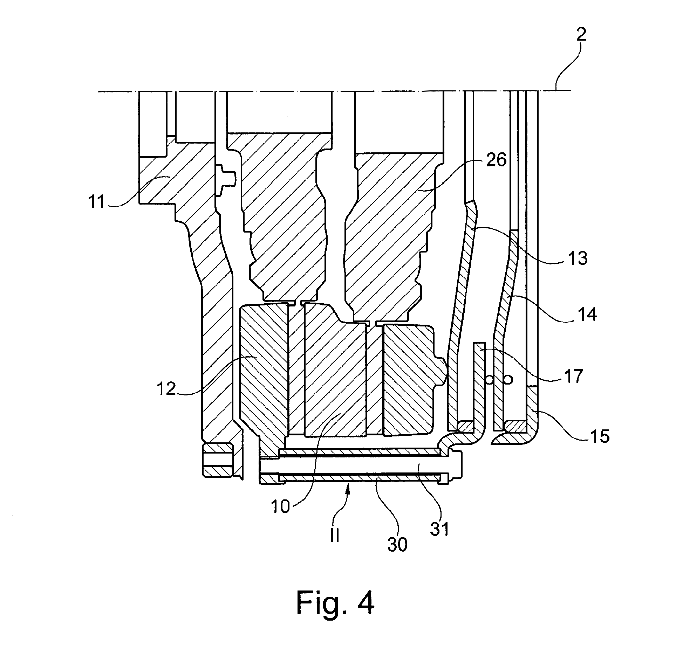

Fig. 3 zeigt eine schematische Darstellung der Doppelkupplung 1 als ein Schnitt im Bereich der Schraubenverbindung I zwischen Deckel 17 der Teilkupplung K2 und Zentralplatte 10 bzw. Schwungscheibe 11 und Fig. 4 zeigt einen Schnitt im Bereich der Verbindung zwischen Deckel 15 der Teilkupplung K1 und Druckplatte (Anpressplatte) 12 der Teilkupplung K1 über die Schraubenverbindungen II.

Dabei zeigt Fig. 4 die Anbindung des Deckels 15 der Teilkupplung K1 an die Druckplatte 12 der Teilkupplung K1 über die Schraubenverbindungen II, wobei die Schraube K1 nur auf Zug belastet ist.

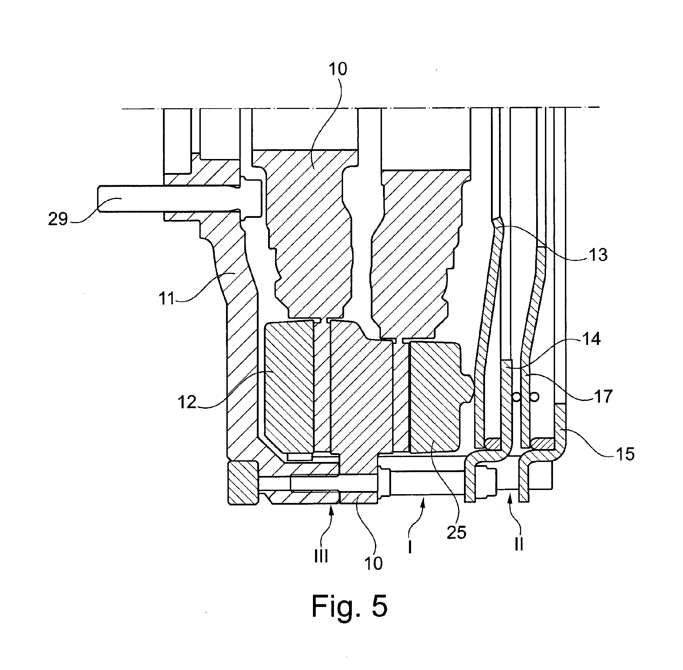

Fig. 5 zeigt eine Schnittdarstellung der Doppelkupplung 1 im Bereich der Schraubenverbindung III zwischen Zentralplatte 10 und Schwungscheibe 11 und dementsprechend die Zentralplattenzentrierung und -befestigung der Zentralplatte an der Schwungscheibe.

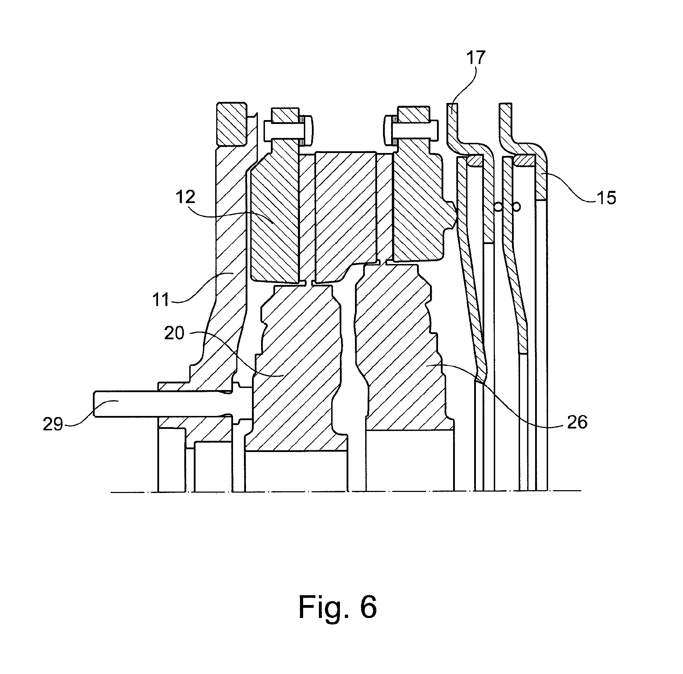

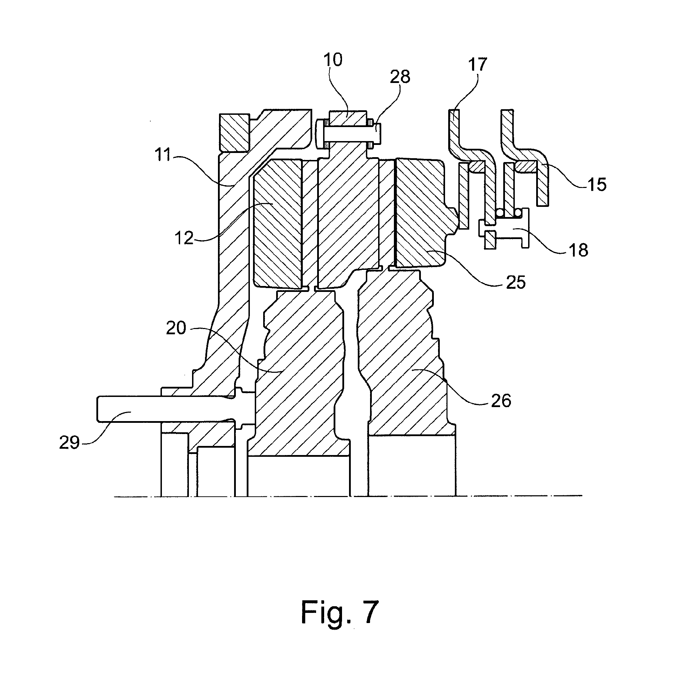

Fig. 6 und Fig. 7 zeigen Nietverbindungen, welche über Blattfederpakete 26, 27 die beiden Druckplatten 12, 25 der Teilkupplungen K1 und K2 jeweils mit der gemeinsamen Zentralplatte 10 verbinden. Diese Blattfederpakete 26, 27 sind auf einander entsprechenden Positionen auf unterschiedlichen Seiten der Zentralplatte 10 angeordnet. Die einander gegenüberliegenden Blattfederpakete 26, 27 sind jeweils, wie aus Fig. 7 ersichtlich, an deren entsprechend anderen Ende über eine gemeinsame Nietverbindung 28 mit der Zentralplatte 10 verbunden.

Aufgrund dieser Ausbildung der Blattfederverbindung 28 erfolgt die Drehmomentenübertragung zwischen den Anpressplatten 12, 25 der Kupplungen K1 und K2 nur über die Blattfederverbindung zur Zwischenplatte 10.

Wie dargelegt werden die Deckel 15, 17 der Teilkupplungen K1 und K2 über Schrauben fixiert und über Abstandsröhren zentriert und beabstandet, so dass die Schrauben nur auf Zug belastet werden und kein Moment übertragen werden muss. Diese Abstandsröhren können auch durch Gußnocken an der Zentralplatte ersetzt werden.

Wie dargelegt wird die Doppelkupplung 1 am Schwungrad 11 verschraubt und ausschließlich an der Kurbelwellenlagerung 29 abgestützt.

Wie weiterhin dargelegt weist die Betätigungseinrichtung 3 der Doppelkupplung 1 einen Zentralausrücker und einen Zentraleinrücker jeweils mit pneumatischer oder hydraulischer Betätigung auf. Aufgrund der gewählten Kraftrichtungen sind die Betätigungskräfte der Kupplung K1 und die Betätigungskräfte der Kupplung K2 einander entgegengesetzt, so dass keine axiale Kraft auf die Kurbelwelle übertragen wird.

Wie weiterhin dargelegt ist die Teilkupplung K1 im Grundzustand geschlossen und muss gezogen werden, um diese zu öffnen und die Teilkupplung K2 ist im Grundzustand offen und muss gedrückt werden, um sie zu schließen, wiederum so dass die Betätigungskräfte K1 und K2 einander entgegenwirken und eine axiale Kraft auf die Kurbelwelle vermieden werden kann.

Die vorstehende Beschreibung offenbart unter anderem, dass die beiden Betätigungskräfte einer Doppelkupplung, einmal die Betätigungskraft der zugedrückten "normally open" Kupplung und einmal die Betätigungskraft der gezogenen "normally closed" Kupplung, sich ausgleichen, so dass die Summe den beiden Betätigungskräfte nahezu Null ist, und eine Überdimensionierung des Kurbelwellelagers oder des Getriebelagers nicht erforderlich ist. Insbesondere offenbart die vorstehende Beschreibung, dass die Teilkupplung K1 im Grundzustand geschlossen ("Normally Closed") ausgebildet ist und zum Öffnen eine Zugkraft aufgebracht wird ("gezogen"), und dass gleichzeitig die Teilkupplung K2 im Grundzustand offen ("Normally Open") ausgebildet ist und zum Schließen eine Druckkraft aufgebracht wird ("zugedrückt").

In Fig. 10 ist ein Diagramm gezeigt, das den Verlauf der Betätigungskräfte bei der vorliegenden Doppelkupplung bei einer Überschneidungsschaltung zeigt. Hierbei ist die Teilkupplung K1 zunächst offen und die Teilkupplung K2 ist zunächst geschlossen, wobei die Betätigungskräfte der Teilkupplungen K1 und K2 einander entgegen gerichtet sind. Die Gesamtbetätigungskraft ist daher nahezu Null. Anschließend wird eine Überschneidungsschaltung durchgeführt, um die Teilkupplung K1 zu schließen und die Teilkupplung K2 zu öffnen. Entsprechend nimmt die Betätigungskraft der Teilkupplung K1 zu und die Betätigungskraft der Teilkupplung K2 ab. Die Gesamtbetätigungskraft bleibt daher im Wesentlichen gleich Null. Im Endzustand ist die Teilkupplung K1 geschlossen und die Teilkupplung K2 offen.

Um die Teilkupplung K1 zu öffnen, muss bei dieser Anordnung an der Tellerfeder gezogen werden. Um die Teilkupplung K2 gleichzeitig zu schließen, muss die Hebelfeder gedrückt werden. Die Betätigungskräfte sind also gegensinnig und die Summe den beiden ist nahe zu null. Damit ergibt sich auch keine axiale Kraftwirkung auf die Kurbelwelle.

Ein weiterer besonderer Vorteil der vorstehend beschriebenen Doppelkupplung ist, dass die Teilkupplung K1 sich durch deren eigene Tellerfederkraft schließt, und dass sich die Teilkupplung K2 durch deren eigene Blattfederkraft öffnet.

Die vorstehende Beschreibung offenbart außerdem einen zentralen pneumatischen Doppelausrücker, wobei ein Zylinder zum Drücken der Teilkupplung K2 und ein anderer zum Ziehen der Teilkupplung K1 vorgesehen sind, und wobei die zwei Zylinder axial angeordnet sind.

Die vorstehende Beschreibung offenbart weiterhin, dass die Doppelkupplung am Schwungrad verschraubt wird und ausschließlich an der Kurbelwellelagerung abgestützt ist. Die Momentübertragung erfolgt nur zwischen den Anpressplatten der Teilkupplungen K1 und K2 einerseits und der Zwischenplatte andererseits über Blattfedern.

Die vorstehende Beschreibung offenbart weiterhin, dass die Deckel der Teilkupplungen K1 und K2 über Schrauben fixiert und über Abstandsröhren zentriert werden. Diese Schrauben werden nur auf Zug beansprucht, es erfolgt keine Momentenübertragung. Die Abstandsröhren können auch durch Gußnocken an der Zentralplatte ersetzt werden.

### Bezugszeichenliste

| | |
|---|---|
| 1 | Doppelkupplung |
| 2 | Rotationsachse |
| 3 | Betätigungsmittel |
| 4 | Zylinder |
| 5 | Betätigungskolben |
| 6 | Druckluftleitung |
| 7 | Luftauslaß |
| 8 | Distanzstücke |
| 9 | Schrauben |
| 10 | Zentralplatte |
| 11 | Schwungscheibe |
| 12 | Druckplatte |
| 13 | Hebelfeder |
| 14 | Tellerfeder |
| 15 | Deckel |
| 16 | Betätigungslager |
| 17 | Deckel |
| 18 | Auflagerung |
| 20 | Kupplungsscheibe |
| 21 | Zylinder |
| 22 | Kolben |
| 23 | Druckluftleitung |
| 25 | Druckplatten |
| 26 | Blattfederpaket |
| 27 | Blattfederpaket |
| 28 | Nietverbindung |
| 29 | Kurbelwellenlagerung |
| | |
| F_{K1} | Zugkraft |
| F_{K2} | Druckkraft |
| K1 | erste Teilkupplung |
| K2 | zweite Teilkupplung |

## Patentansprüche

1. Doppelkupplung mit einer ersten Teilkupplung (K1), über die eine Antriebswelle eines Antriebs mit einer ersten Getriebeeingangswelle eines Getriebes verbindbar ist und mit einer zweiten Teilkupplung (K2), über die die Antriebswelle des Antriebs mit einer zweiten Getriebeeingangswelle des Getriebes verbindbar ist und mit einer Betätigungseinrichtung, wobei die erste Teilkupplung (K1) in deren unbetätigtem Zustand geschlossen ist und zum Öffnen dieser ersten Teilkupplung (K1) eine Zugkraft aufgebracht wird, und dass die zweite Teilkupplung (K2) in deren unbetätigtem Zustand geöffnet ist und zum Schließen dieser zweiten Teilkupplung (K2) eine Druckkraft aufgebracht wird, so dass die Betätigungskraft der ersten Teilkupplung (K1) entgegen der Betätigungskraft der zweiten Teilkupplung (K2) wirkt und wobei die Betätigungseinrichtung zwei pneumatisch oder hydraulisch betätigte Teilbetätigungseinrichtungen aufweist, von denen jeweils eine zur Betätigung einer der beiden Teilkupplungen (K1, K2) vorgesehen ist, **dadurch gekennzeichnet, dass** die erste Teilbetätigungseinrichtung einen ersten Zylinder (4) mit einem Betätigungskolben (5) und die zweite Teilbetätigungseinrichtung einen zweiten Zylinder (21) mit einem Betätigungskolben (22) aufweisen, die als ein gemeinsames bezüglich einer Rotationsachse der Doppelkupplung zentral angeordnetes Betätigungsmittel getriebeseitig angeordnet sind, wobei mit dem ersten Zylinder eine Zugkraft (FK1) und mit dem zweiten Zylinder eine Druckkraft (FK2) zur Betätigung der jeweiligen Teilkupplungen in der Art erzeugbar sind, dass diese gegensinnig zueinander wirken.

2. Doppelkupplung nach Anspruch 1, **dadurch gekennzeichnet, dass** jede der Teilbetätigungseinrichtungen zwei voneinander getrennte Druckkammern aufweist.

3. Doppelkupplung, nach einem der vorhergehenden Ansprüche, **gekennzeichnet durch** eine Schwungscheibe, die mit einer Antriebswelle eines Antriebs fest verbunden ist, wobei die Doppelkupplung eine Zentralplatte als Gegendruckplatte für die Druckplatten der Teilkupplungen aufweist, wobei die Zentralplatte an der Schwungscheibe fixiert ist, und wobei die Doppelkupplung ausschließlich über die Befestigung der Schwungscheibe an der Antriebswelle gelagert ist.

4. Doppelkupplung, nach einem der vorhergehenden Ansprüche, mit einer ersten Teilkupplung, über die eine Antriebswelle eines Antriebs mit einer ersten Getriebeeingangswelle eines Getriebes verbindbar ist und mit einer zweiten Teilkupplung, über die die Antriebswelle des Antriebs mit einer zweiten Getriebeeingangswelle des Getriebes verbindbar ist, wobei die Doppelkupplung eine Zentralplatte als Gegendruckplatte für die Druckplatten der Teilkupplungen aufweist, **dadurch gekennzeichnet, dass** die Druckplatten beider Teilkupplungen über Blattfedern, insbesondere in Verbindung mit Nietverbindungen, direkt an der Zentralplatte oder am Gehäuse fixiert sind.
